# EUROPÄISCHE PATENTSCHRIFT

(11) **EP 3 280 893 B1**
(45) Veröffentlichungstag und Bekanntmachung des Hinweises auf die Patenterteilung: **09.01.2019**
(21) Anmeldenummer: 16729818.1
(22) Anmeldetag: 03.06.2016
(51) Int. Cl.: F02C 7/18, F28F 27/00

(54) **KÜHLEINRICHTUNG ZUR VERWENDUNG IN EINEM KRAFTWERK**
COOLING DEVICE FOR USE IN A POWER PLANT
DISPOSITIF DE REFROIDISSEMENT DESTINÉ À ÊTRE UTILISÉ DANS UNE CENTRALE ÉLECTRIQUE

(30) Priorität: 09.07.2015 DE 102015212890
(43) Veröffentlichungstag der Anmeldung: 14.02.2018
(73) Patentinhaber: Siemens Aktiengesellschaft, 80333 München (DE)
(72) Erfinder: WARUSCHEWSKI, Andreas, 46242 Bottrop (DE)
(86) Internationale Anmeldenummer: PCT/EP2016/062583
(87) Internationale Veröffentlichungsnummer: WO 2017/005427

(56) Entgegenhaltungen:
- EP-A2- 1 431 698
- US-A1- 2006 179 857
- US-A1- 2007 289 327

## Beschreibung

Die Erfindung betrifft eine Kühleinrichtung zur Verwendung in einem Kraftwerk sowie ein Verfahren zum Betreiben einer solchen Kühleinrichtung. Beispielsweise aus der US 2007/289327 A1 ist eine Kühlvorrichtung mit zwei abwechselnd aktivierbaren Wärmetauschern und wenigstens einem Lüfter zum Blasen von Luft durch die Wärmetauscher bekannt.

In einem Kraftwerksumfeld ist es oftmals erforderlich, Prozessströme eines Fluids mittels einer Kühleinrichtung zu geringeren Temperaturen hin zu konditionieren. Insbesondere bei Gasturbinenanwendungen sind solche Kühleinrichtungen erforderlich, um etwa Anzapfluft, die aus dem Verdichter entnommen wird, auf ein geringeres Temperaturniveau zu bringen. Die abgekühlte Anzapfluft kann wiederum für Spülvorgänge bzw. zur thermischen Isolierung des Gehäuses der Gasturbine genutzt werden. Da jedoch bei Gasturbinen, insbesondere bei stationären Gasturbinen, verhältnismäßig große Mengen an thermischer Energie anfallen, sind Kühleinrichtungen vorzusehen, die eine effektive Kühlung des jeweiligen Prozessmediums ermöglichen können.

Typische in einem Kraftwerksumfeld eingesetzte Kühleinrichtungen weisen eine Mehrzahl an steuerbaren Lüftern auf, die jeweils einen Luftstrom mit vorgegebener Strömungsrichtung erzeugen können, wobei jeweils dieser Luftstrom nach thermischer Wechselwirkung mit einem Wärmetauscher von diesem als Sekundärmedium Wärme zu Kühlzwecken abführen kann. Ist es erforderlich, bei dem zu kühlenden Primärmedium in dem Wärmetauscher eine konstante Temperatur bereitzustellen, werden die Lüfter typischerweise oberhalb einer bestimmten Mindestdrehzahl konstant betrieben, wobei der Strom des Primärmediums ebenfalls konstant eingestellt ist.

Beim Vorsehen einer Mehrzahl an steuerbaren Lüftern, die mit demselben Wärmetauscher thermisch wechselwirken, kann es jedoch zu Rückströmungen von einem Lüfter zu einem anderen Lüfter kommen, so dass die steuerbaren Lüfter meist durch eine Schließklappe verschlossen werden, insbesondere soweit diese Lüfter nicht weiter gebraucht werden. Derartige Schließklappen werden typischerweise durch den Staudruck eines Luftstroms aus einem Lüfter geöffnet, wobei nach Erreichen der vorbestimmten Mindestdrehzahl die Schließklappe durch den Strömungsdruck offen gehalten werden kann. Hierbei ist im Normalfall jedem Lüfter eine derartige Schließklappe zugeordnet, wobei die Schließklappen im Bereich der Mindestdrehzahl eine Öffnungsbewegung vollführen. Derartige Schließklappen können aber im Grenzdruckbereich nicht nur eine kurzzeitig unkontrollierte Bewegung vollführen, sondern auch gegen Teile des Gehäuses oder der Anbringung schlagen, was zu vermeiden ist.

Im Rahmen der verstärkten Flexibilisierung von Kraftwerken ist es zudem auch erforderlich, Prozessströme eines Primärmediums nicht über einen längeren Zeitraum kontinuierlich zu kühlen, bzw. die Kühlleistung zu variieren. So ist es etwa erforderlich, die Kühlleistung auch zeitlich intermittierend bereitstellen zu können. Insofern kommt es zu häufigen An- und Ausschaltvorgängen der Lüfter, wodurch die Lüftermotoren stark belastet werden und infolge die Lebensdauer eines Lüfters leidet. Zudem ergibt sich aufgrund der unterschiedlichen Fahrweisen der einzelnen Lüfter nicht nur eine Lebensdauerverminderung sondern eine erhöhte Lärmbelästigung, wie auch eine weitgehend unkontrollierte Abstrahlung von Wärme durch die Motoren der Lüfter.

Weiterhin zeigt es sich im Rahmen einer zunehmenden Flexibilisierung des Kraftwerkbetriebs als erforderlich, dass Lüfter nicht nur oberhalb der vorbestimmten Mindestdrehzahl kontinuierlich betrieben werden können, sondern auch ein Betrieb unterhalb der vorbestimmten Mindestdrehzahl erreicht werden sollte. In Folge eines unterdrehzahligen Betriebs kann jedoch ein gesicherter Betrieb der Schließklappen nicht mehr erfolgen, so dass auch dieser Umstand häufige An- und Ausschaltvorgänge der Lüfter erfordert.

Neben den bereits erwähnten Nachteilen der ungünstigen Wärmeentwicklung wie auch erhöhter Lärmbelastung aufgrund eines flexiblen Betriebsverhaltens, zeigt es sich, dass auch die Primärmedien aufgrund der Betriebseinschränkungen durch die Klappen nicht mehr auf einen konstanten Temperaturwert konditioniert werden können. Vielmehr schwankt die Ausgangstemperatur des Primärmediums, welches aus dem Wärmetauscher austritt so stark, dass es den kraftwerkstechnischen Betrieb beeinträchtigen kann.

Diese aus dem Stand der Technik bekannten Nachteile sollen durch eine technische Weiterentwicklung gelöst werden, um insbesondere einen verbesserten flexibilisierten Betrieb der Kühleinrichtungen zu erlauben.

Diese der Erfindung zugrundeliegende Aufgabe wird gelöst durch eine Kühleinrichtung gemäß Anspruch 1, wie auch durch ein Verfahren zum Betrieb einer solchen Kühleinrichtung gemäß Anspruch 10.

Insbesondere werden die der Erfindung zugrundeliegenden Aufgaben gelöst durch eine Kühleinrichtung zur Verwendung in einem Kraftwerk, umfassend wenigstens zwei steuerbare Lüfter, welche bei Betrieb jeweils dazu ausgebildet sind, einen Luftstrom mit vorgegebener Strömungsrichtung zu erzeugen. Weiterhin umfassend wenigstens zwei Schließklappen, die jeweils einen Strömungsquerschnitt verschließen können, und weiterhin umfassend einen Wärmetauscher, welcher wenigstens mit den beiden Luftströmen zum Wärmeaustausch als Sekundärmedium thermisch wechselwirken kann, wobei die Schließklappen durch keine mechanische Verstellvorrichtung bedient werden können, sondern lediglich durch einen der beiden Luftströme aufgrund des Staudrucks bei Erreichen einer minimalen Strömungsrate geöffnet werden, und wobei weiterhin wenigstens zwei Haltevorrichtungen vorgesehen sind, welche bei Öffnung der Schließklappen, diese jeweils in einer geöffneten Position halten können.

Weiterhin werden die der Erfindung zugrundeliegenden Aufgaben gelöst durch ein Verfahren zum Betreiben einer solchen vorab wie auch nachfolgend beschriebenen Kühleinrichtung, welches folgende Schritte umfasst:
- Betreiben wenigstens eines der wenigstens zwei Lüfter, so dass die minimale Strömungsrate (Smin) erreicht wird;
- Nach oder auch vor Erreichen der minimalen Strömungsrate (Smin) Aktivieren der jeweils zugeordneten Haltevorrichtung zum Halten der jeweils zugeordneten Schließklappe in einer geöffneten Position.

Erfindungsgemäß ist also vorgesehen, dass die Kühleinrichtung wenigstens zwei steuerbare Lüfter aufweist, die durch jeweils eine zugeordnete Schließklappe verschlossen werden können.

Bei Schließen der Schließklappe kann somit keine Rückströmung eines sich in Betrieb befindlichen Lüfters in Richtung eines anderen Lüfters erfolgen, der sich nicht im Betrieb befindet. Je nach Anzahl an betriebenen Lüfter, kann der Wärmetauscher mit einer unterschiedlichen Anzahl an Lüftern zur Abführung von Wärme eines Primärmediums betrieben werden. Die von der Kühleinrichtung vorgesehenen Schließklappen weisen weiterhin keine mechanische Verstellvorrichtung auf, die eine gezielte Einstellung des durch die Schließklappen freigegebenen Querschnitts für den jeweiligen Luftstrom erreichen könnte. Die Schließklappen werden lediglich aufgrund des Staudrucks des von einem zugeordneten Lüfter erzeugten Luftstroms geöffnet, wobei die Öffnung oberhalb einer minimalen Strömungsrate erreicht ist.

Ist die Schließklappe aufgrund des ausreichenden Staudrucks vollständig geöffnet, kann vorher oder auch nachher eine Haltevorrichtung aktiviert werden, die bei Öffnung der Schließklappe, diese in einer geöffneten Position halten kann. Die Öffnung der Schließklappe erfolgt nachfolgend also nicht mehr aufgrund des Staudrucks bzw. Strömungsdrucks des Luftstroms sondern lediglich aufgrund der Wechselwirkung mit der jeweiligen Haltevorrichtung. Damit kann gewährleistet werden, dass auch bei geringeren Strömungsraten als der vorbestimmten minimalen Strömungsrate der Lüfter betrieben werden kann, ohne dass die jeweils zugeordnete Schließklappe geschlossen wird. Folglich ist es auch nicht erforderlich, die Lüfter jeweils in einer Betriebsweise nach dem Stand der Technik an- und abzufahren, da nun auch ein Betrieb bei geringeren Luftströmungen ermöglicht werden kann. In anderen Worten erlaubt die Haltevorrichtung ein Offenhalten der Schließklappen, unabhängig von der Drehzahl des jeweils zugeordneten Lüfters.

Aufgrund des so verbessert flexibilisierten Einsatzes der Kühlvorrichtung kann nicht nur das An- und Abfahren der jeweiligen Lüfter genauer eingestellt werden, sondern auch die oben beschriebene Lärmbelastung aufgrund der Schließklappen, die mit dem Gehäuse oder der Anbringung an der Kühleinrichtung wechselwirken, kann vermieden werden. Weiterhin kann der Wärmetauscher auch derartig flexibel betrieben werden, dass auf eine konstante Temperatur des Primärmediums geregelt werden kann.

Eine erste bevorzugte Ausführungsform dieser erfindungsgemäßen Kühleinrichtung sieht vor, dass die Haltevorrichtung elektrisch betrieben ist, insbesondere einen schaltbaren Elektromagneten umfasst. Ein solcher schaltbarer Elektromagnet, wie auch andere elektrische Haltevorrichtungen, können leicht im Rahmen einer Wartung auch nachträglich vorgesehen werden, wobei die Aktivierung und Deaktivierung der jeweiligen Haltevorrichtungen zentral etwa über die Leittechnik des Kraftwerks erreicht werden kann. Ebenso ist es natürlich denkbar, eine eigene Steuerung vorzusehen. Eine elektrische Haltevorrichtung erlaubt den Einsatz einer zentralen elektrischen Steuerung.

Gemäß einer anderen bevorzugten Ausführungsform der Erfindung ist vorgesehen, dass weiterhin eine Steuerung umfasst ist, welche sowohl mit den wenigstens zwei Lüftern als auch mit den wenigstens zwei Haltevorrichtungen elektrisch verschaltet ist. Die Steuerung kann hierbei die wenigstens zwei Haltevorrichtungen aktivieren und deaktivieren in Abhängigkeit der Drehzahl des jeweiligen Lüfters bzw. der Strömungsrate der durch diese erzeugten Luftströme. Eine gezielte Offenhaltung der jeweiligen Schließklappen kann damit vorteilhaft im Rahmen eines kraftwerkstechnischen Steuerungsverfahrens erreicht werden.

Gemäß einer Weiterführung dieser Erfindungsidee ist vorgesehen, dass die Steuerung dazu ausgebildet ist, die Haltevorrichtung zu aktivieren, wenn der jeweils zugeordnete Lüfter eine vorbestimmte erste Strömungsrate erreicht hat. Die Steuerung kann hierbei etwa die Drehzahl des zugeordneten Lüftermotors als Steuerparameter heranziehen, aus welchem etwa ein direktes Verhältnis mit der Strömungsrate des jeweiligen Lüfters abgeleitet werden kann. Andere Steuerparameter, welche zur Charakterisierung der jeweiligen ersten Luftströmungsrate geeignet sind, sind natürlich ebenfalls denkbar. Ist die ausführungsgemäße erste Strömungsrate erreicht, kann davon ausgegangen werden, dass die Schließklappe in einer Offenstellung vorliegt, so dass die jeweils zugeordnete Haltevorrichtung durch Aktivierung die Schließklappe in der vorliegenden offenen Position weiterhin halten kann. Auch bei einer nachfolgenden Verminderung der Strömungsrate kann also die Schließklappe in einer Offenposition durch die Haltevorrichtung gehalten werden.

Gemäß einer weiteren Ausführungsform, die auch als Weiterführung zu sehen ist, ist vorgesehen, dass die Steuerung dazu ausgebildet ist, die Haltevorrichtung zu deaktivieren, wenn der jeweils zugeordnete Lüfter eine vorbestimmte zweite Strömungsrate erreicht hat, insbesondere wenn der jeweils zugeordnete Lüfter keinen Luftstrom fördert. Die zweite Strömungsrate ist hierbei im Normalfall kleiner als die erste Strömungsrate, da eine Deaktivierung des jeweiligen Lüfters im Normalbetrieb nur dann erfolgen soll, wenn vorab eine erste Strömungsrate etwa zur Aktivierung der Haltevorrichtung erreicht war. In anderen Worten ist die Steuerung auch dazu ausgebildet, bei Verminderung der Luftströmungsrate bei geöffneter Schließklappe eine Deaktivierung einzuleiten, wenn ein Luftstrom erzeugt ist, der etwa zur Kühlung des Primärmediums mittels des Wärmetauschers keinen nennenswerten Beitrag leistet. Insbesondere ist dies der Fall, wenn der Lüfter selbst keinen Luftstrom mehr fördert.

Gemäß einer weiteren bevorzugten Ausführungsform der Erfindung ist vorgesehen, dass die Steuerung dazu ausgebildet ist, einen der Haltevorrichtung zugeführten elektrischen Strom zu erfassen, um feststellen zu können, ob die Haltevorrichtung offen oder geschlossen ist. Über die Erfassung des Stroms kann somit die Steuerung Auskunft darüber erhalten, in welchem Zustand die Haltevorrichtung vorliegt. Dies kann etwa bei der Behebung von Störungen besonders vorteilhaft sein.

Gemäß einer weiteren besonders bevorzugten Ausführungsform der Erfindung ist vorgesehen, dass die wenigstens zwei steuerbaren Lüfter, die wenigstens zwei Schließklappen der Wärmetauscher und die wenigstens zwei Haltevorrichtungen in einem Gehäuse gemeinsam angeordnet sind. Eine derartige Anordnung erlaubt etwa die leichte modulare Handhabung der Kühleinrichtung, wie auch eine klare Einstellung der jeweiligen Strömungsverhältnisse in dem Gehäuse. Insbesondere findet die Wechselwirkung der durch die jeweiligen Lüfter erzeugten Luftströme zu einem Zeitpunkt statt, zu welchem noch kein Kontakt mit der Außenumgebung erfolgt ist. Das Gehäuse ermöglicht somit einen besonders effizienten Kühlbetrieb.

Gemäß einer weiteren vorteilhaften Ausführungsform der erfindungsgemäßen Kühleinrichtung ist vorgesehen, dass die wenigstens zwei Schließklappen gravitativ durch ihr Eigengewicht geschlossen werden können. Die Schließklappen können also bspw. endständig an einer Seite durch ein Klappscharnier gehalten werden, wobei die Fläche der Schließklappe den dem einen Lüfter zugeordneten Strömungsquerschnitt verschließen kann.

Gemäß einer ebenfalls bevorzugten Ausführungsform der Erfindung ist vorgesehen, dass weiterhin die vorgegebenen Strömungsrichtungen wenigstens einiger Lüfter, bevorzugt aller Lüfter senkrecht auf die Oberfläche des Wärmetauschers treffen. Aufgrund dieser geometrischen Anordnung kann eine besonders günstige Wärmeabführung am Wärmetauscher erfolgen, da durch die starke Verwirbelung der auftreffenden Luftströme eine effiziente turbulente Wärmeabführung ermöglicht werden kann.

Gemäß einer ersten besonders bevorzugten Ausführungsform des erfindungsgemäßen Verfahrens ist vorgesehen, dass weiterhin folgende Schritte mit umfasst sind:
- Nach Halten der Schließklappe, Vermindern der Strömungsrate des wenigstens einen Lüfters unterhalb einer vorbestimmten zweiten Strömungsrate;
- Nach Erreichen der zweiten Strömungsrate, Deaktivieren der jeweils zugeordneten Haltevorrichtung zum Schließen der jeweils zugeordneten Schließklappe.

Nachfolgend soll die Erfindung anhand einzelner Figuren im Detail näher beschrieben werden. Hierbei ist darauf hinzuweisen, dass die Figuren lediglich schematisch zu verstehen sind, und daraus keine mangelnde Ausführbarkeit der Erfindung ableitbar ist.

Weiterhin ist darauf hinzuweisen, dass die nachfolgend dargestellten technischen Merkmale in beliebiger Kombination miteinander beansprucht werden sollen, soweit diese Kombination eine Lösung der Erfindungsaufgabe erreichen kann.

Weiterhin ist darauf hinzuweisen, dass die mit gleichen Bezugszeichen versehenen technischen Merkmale gleiche technische Wirkungen aufweisen.

Hierbei zeigen:
- Figur 1: eine erste schematische Ausführungsform der erfindungsgemäßen Kühleinrichtung in Schaltansicht;
- Figur 2: eine flussdiagrammatische Darstellung einer bevorzugten Ausführungsform des erfindungsgemäßen Verfahrens.

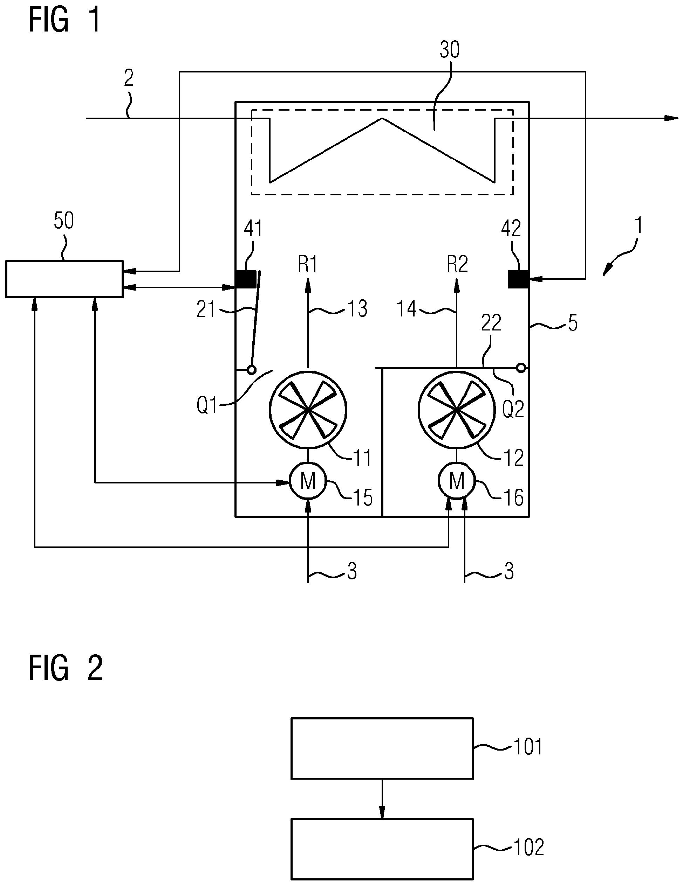

Figur 1 zeigt eine bevorzugte Ausführungsform der Erfindung in schematischer Schaltansicht. Die gezeigte Kühleinrichtung 1 weist innerhalb eines Gehäuses 5 einen Wärmetauscher 30 auf, der mit zwei Lüftern 11, 12 zur Wärmeabführung in thermische Wechselwirkung gebracht werden kann. Die Lüfter 11, 12 weisen neben einer einen Luftstrom erzeugenden Dreheinheit (nicht mit eigenen Bezugszeichen versehen) einen Lüftermotor 15, 16 auf, der die Dreheinheit energetisiert. Die Lüfter 11, 12, sind dazu ausgebildet, Luft als Sekundärmedium 3 anzusaugen und in einen Luftstrom 13, 14 zu bündeln, der auf den Wärmetauscher 30 trifft. Die jeweiligen Luftströme 13, 14 wechselwirken mit dem Wärmetauscher 30 derart thermisch, dass das Sekundärmedium 3 zur Kühlung eines Primärmediums 2 genutzt werden kann, welches durch den Wärmetauscher 30 hindurch geführt wird.

Die Lüfter 11, 12, können fluidtechnisch von dem Wärmetauscher 30 jeweils durch eine Schließklappe 21, 22 abgekoppelt werden, wobei die Schließklappen 21, 22 in erster Linie dafür vorgesehen sind, einen Strömungsrückfluss eines Lüfters 11, 12 zum jeweils anderen Lüfter 11, 12 hin zu vermeiden. Die Schließklappen 21, 22 sind typischerweise endständig über ein Scharnier kippbar am Gehäuse angebracht, so dass bei Betreiben des jeweiligen Lüfters 11, 12 nach Erreichen einer minimalen Strömungsrate Smin die jeweilige Schließklappe 21, 22 durch den Staudruck geöffnet werden kann, wonach der Luftstrom 13, 14 durch den jeweiligen Strömungsquerschnitt Q1, Q2 hindurch treten kann und in einer jeweiligen Strömungsrichtung R1, R2 zu dem Wärmetauscher 30 geleitet wird. Je nach Strömungsrate 13, 14 kann eine höhere bzw. niedrigere Kühlleistung an den Wärmetauscher 30 geführt werden.

Ist die Kühleinrichtung 1 nun in einem flexiblen Kraftwerkumfeld einzusetzen, kann es erforderlich sein, dass die Lüfter 11, 12 auch bei einer Drehzahl betrieben werden, so dass die minimale Strömungsrate zum Öffnen der jeweiligen Schließklappen 21, 22 nicht erreicht wird oder werden soll. Um die Schließklappen 21, 22 dennoch zu öffnen, kann der jeweilige Lüfter 11, 12, derart betrieben werden, dass zeitweilig die minimale Strömungsrate Smin erreicht oder übertroffen wird, wobei im Anschluss daran eine jeweils dem Lüfter 11, 12 zugeordnete Haltevorrichtung 41, 42 aktiviert werden kann, um die jeweilige Schließklappe 21, 22 in der Offenposition zu halten. Anschließend kann wiederum die Strömungsrate des jeweiligen Luftstroms 13, 14 vermindert werden, so dass die jeweiligen Lüfter 11, 12 auch flexibel unterhalb der minimalen Strömungsrate Smin eingesetzt werden können.

Die Haltevorrichtungen 41, 42 sind typischerweise elektrisch betrieben und können entweder einen Elektromagneten oder einen anderen elektrisch aktivierbaren und betreibbaren Haltemechanismus umfassen. Die Haltevorrichtungen 41, 42 sind weiterhin mit einer Steuerung 50 elektrisch verschaltet, die ebenfalls mit den jeweiligen Motoren 15, 16 der Lüfter 11, 12 gekoppelt sind. Ist die Haltevorrichtung 41, 42 etwa als Elektromagnet ausgebildet, kann durch die Erfassung des Versorgungsstromes mittels der Steuerung 50 in Erfahrung gebracht werden, ob die Schließklappe 21, 22 sich in einer Offen-Position oder geschlossenen Position befindet. Weiterhin kann bei Erreichen einer vorbestimmten Drehzahl, welche etwa dazu ausgebildet ist, die minimale Strömungsrate Smin des jeweiligen Lüfters 11, 12 zu erzeugen, die jeweilige Haltevorrichtung 41, 42 aktiviert werden, um die Schließklappen 21, 22 in der Offen-Position zu halten. Ebenfalls kann nach vorliegender Offen-Position die Haltevorrichtung 41, 42 wiederum deaktiviert werden, wenn etwa die Strömungsrate der einzelnen Luftströme 13, 14 unterhalb eines zweiten Grenzwertes fällt. Damit kann erreicht werden, dass insbesondere bei Vorliegen einer sehr geringen Strömungsrate, ein Rückströmen der Luft in diesen aus dem jeweils anderen Lüfter 11, 12 vermeiden werden kann.

Figur 2 zeigt eine flussdiagrammatische Darstellung einer bevorzugten Ausführungsform des erfindungsgemäßen Verfahrens zum Betreiben einer vorab beschriebenen Kühleinrichtung 1, welches folgende Schritte umfasst:
- Betreiben wenigstens eines der wenigstens zwei Lüfter 11, 12, so dass die minimale Strömungsrate (Smin) erreicht wird; (erster Verfahrensschritt 101)
- Nach Erreichen der minimalen Strömungsrate (Smin) Aktivieren der jeweils zugeordneten Haltevorrichtung 41, 42 zum Halten der jeweils zugeordneten Schließklappe 21, 22 in einer geöffneten Position. (zweiter Verfahrensschritt 101)

Weitere Ausführungsformen ergeben sich aus den Unteransprüchen.

## Patentansprüche

1. Kühleinrichtung (1) zur Verwendung in einem Kraftwerk, umfassend wenigstens zwei steuerbare Lüfter (11, 12), welche bei Betrieb jeweils dazu ausgebildet sind, einen Luftstrom (13, 14) mit vorgegebener Strömungsrichtung (R1, R2) zu erzeugen, weiterhin umfassend wenigstens zwei Schließklappen (21, 22), die jeweils einen Strömungsquerschnitt (Q1, Q2) verschließen können, und weiterhin umfassend einen Wärmetauscher (30), welcher mit den wenigstens beiden Luftströmen (13, 14) zum Wärmeaustausch als Sekundärmedium thermisch wechselwirken kann, **dadurch gekennzeichnet, dass** die Schließklappen (21, 22) durch keine mechanische Verstellvorrichtung bedient werden können, sondern lediglich jeweils durch einen der beiden Luftströme (13, 14) aufgrund des Staudrucks bei Erreichen einer minimalen Strömungsrate (Smin) geöffnet werden, und wobei weiterhin wenigstens zwei Haltevorrichtungen (41, 42) vorgesehen sind, welche bei Öffnung der Schließklappen (21, 22), diese jeweils in einer geöffneten Position halten können.

2. Kühleinrichtung gemäß Anspruch 1,
**dadurch gekennzeichnet, dass** die Haltevorrichtungen (41, 42) elektrisch betrieben sind, insbesondere einen schaltbaren Elektromagneten umfassen.

3. Kühleinrichtung gemäß einem der vorhergehenden Ansprüche,
**dadurch gekennzeichnet, dass** weiterhin eine Steuerung (50) umfasst ist, welche sowohl mit den wenigstens zwei Lüftern (11, 12) sowie den wenigstens zwei Haltevorrichtungen (41, 42) elektrisch verschaltet ist.

4. Kühleinrichtung gemäß Anspruch 3,
**dadurch gekennzeichnet, dass** die Steuerung (50) dazu ausgebildet ist, die Haltevorrichtung (41, 42) zu aktivieren, wenn der jeweils zugeordnete Lüfter (11, 12) eine vorbestimmte erste Strömungsrate erreicht hat.

5. Kühleinrichtung gemäß Anspruch 3 oder 4,
**dadurch gekennzeichnet, dass** die Steuerung (50) dazu ausgebildet ist, die Haltevorrichtung (41, 42) zu deaktivieren, wenn der jeweils zugeordnete Lüfter (11, 12) eine vorbestimmte zweite Strömungsrate erreicht hat, insbesondere wenn der jeweils zugeordnete Lüfter (11, 12) keinen Luftstrom fördert.

6. Kühleinrichtung gemäß einem der Ansprüche 3 bis 5,
**dadurch gekennzeichnet, dass** die Steuerung (50) dazu ausgebildet ist, einen der Haltevorrichtung (41, 42) zugeführten elektrischen Strom zu erfassen, um feststellen zu können, ob die Haltevorrichtung (41, 42) offen oder geschlossen ist.

7. Kühleinrichtung gemäß einem der vorhergehenden Ansprüche,
**dadurch gekennzeichnet, dass** die wenigstens zwei steuerbaren Lüfter (11, 12), die wenigstens zwei Schließklappen (21, 22), der Wärmetauscher (30) und die wenigstens zwei Haltevorrichtungen (41, 42) in einem Gehäuse (5) angeordnet sind.

8. Kühleinrichtung gemäß einem der vorhergehenden Ansprüche,
**dadurch gekennzeichnet, dass** die wenigstens zwei Schließklappen (21, 22) gravitativ durch ihr Eigengewicht geschlossen werden können.

9. Kühleinrichtung gemäß einem der vorhergehenden Ansprüche,
**dadurch gekennzeichnet, dass** weiterhin die vorgegebenen Strömungsrichtungen (R1, R2) wenigstens einiger der Lüfter (11, 12), bevorzugt aller Lüfter (11, 12) senkrecht auf die Oberfläche des Wärmetauschers (30) treffen.

10. Verfahren zum Betreiben einer Kühleinrichtung (1) gemäß einem der vorhergehenden Ansprüche, welches folgende Schritte umfasst:
- Betreiben wenigstens eines der wenigstens zwei Lüfter (11, 12), so dass die minimale Strömungsrate (Smin) erreicht wird;
- Nach oder auch vor Erreichen der minimalen Strömungsrate (Smin) Aktivieren der jeweils zugeordneten Haltevorrichtung (41, 42) zum Halten der jeweils zugeordneten Schließklappe (21, 22) in einer geöffneten Position.

11. Verfahren gemäß Anspruch 10,
**dadurch gekennzeichnet, dass** weiterhin folgende Schritte mit umfasst sind:
- Nach Halten der Schließklappe (21, 22) Vermindern der Strömungsrate des wenigstens einen Lüfters (11, 12) unterhalb einer vorbestimmten zweiten Strömungsrate (S2);
- Nach Erreichen der zweiten Strömungsrate (S2) Deaktivieren der jeweils zugeordneten Haltevorrichtung (41, 42) zum Schließen der jeweils zugeordneten Schließklappe (21, 22).

## Claims

1. Cooling device (1) for use in a power plant, comprising at least two controllable fans (11, 12), which are each designed to produce an air flow (13, 14) having a specified flow direction (R1, R2) during operation, furthermore comprising at least two closing flaps (21, 22), which can close respective flow cross-sections (Q1, Q2), and furthermore comprising a heat exchanger (30), which can thermally interact with the at least two air flows (13, 14) for heat exchange as a secondary medium, **characterized in that** the closing flaps (21, 22) cannot be operated by means of a mechanical adjusting device but rather can each be opened solely by means of one of the two air flows (13, 14) as a result of the dynamic pressure when a minimum flow rate (Smin) is reached, and wherein furthermore at least two holding devices (41, 42) are provided, which can hold the respective closing flaps in an open position when the closing flaps (21, 22) are opened.

2. Cooling device according to Claim 1,
**characterized in that**
the holding devices (41, 42) are electrically operated, in particular comprise a switchable electromagnet.

3. Cooling device according to one of the preceding claims,
**characterized in that**
a controller (50) is furthermore included, which is connected electrically both to the at least two fans (11, 12) and to the at least two holding devices (41, 42).

4. Cooling device according to Claim 3,
**characterized in that**
the controller (50) is designed to activate the holding device (41, 42) when the respectively associated fan (11, 12) has reached a specified first flow rate.

5. Cooling device according to Claim 3 or 4,
**characterized in that**
the controller (50) is designed to deactivate the holding device (41, 42) when the respectively associated fan (11, 12) has reached a specified second flow rate, in particular when the respectively associated fan (11, 12) is not delivering an air flow.

6. Cooling device according to one of Claims 3 to 5,
**characterized in that**
the controller (50) is designed to detect an electric current fed to the holding device (41, 42) in order to be able to determine whether the holding device (41, 42) is open or closed.

7. Cooling device according to one of the preceding claims,
**characterized in that**
the at least two controllable fans (11, 12), the at least two closing flaps (21, 22), the heat exchanger (30) and the at least two holding devices (41, 42) are arranged in a casing (5).

8. Cooling device according to one of the preceding claims,
**characterized in that**
the at least two closing flaps (21, 22) can be closed gravitationally by their own weight.

9. Cooling device according to one of the preceding claims,
**characterized in that**
the specified flow directions (R1, R2) of at least some of the fans (11, 12), preferably of all the fans (11, 12), furthermore strike the surface of the heat exchanger (30) perpendicularly.

10. Method for operating a cooling device (1) according to one of the preceding claims, which comprises the following steps:
- operating at least one of the at least two fans (11, 12), with the result that the minimum flow rate (Smin) is reached;
- activating the respectively associated holding device (41, 42) to hold the respectively associated closing flap (21, 22) in an open position after or even before the minimum flow rate (Smin) is reached.

11. Method according to Claim 10,
**characterized in that**
the following steps are furthermore included:
- reducing the flow rate of the at least one fan (11, 12) below a specified second flow rate (S2) after holding the closing flap (21, 22);
- deactivating the respectively associated holding device (41, 42) to close the respectively associated closing flap (21, 22) after the second flow rate (S2) has been reached.

## Revendications

1. Dispositif (1) de refroidissement à utiliser dans une centrale électrique, comprenant au moins deux ventilateurs (11, 12), qui peuvent être commandés et qui sont constitués chacun pour produire, en fonctionnement, un courant (13, 14) d'air, ayant une direction (R1, R2) d'écoulement donnée à l'avance, comprenant, en outre, au moins deux volets (21, 22) de fermeture, qui peuvent chacun fermer une section (Q1, Q2) transversale d'écoulement et comprenant, en outre, un échangeur de chaleur (30), qui peut être en interaction thermique avec les au moins deux courants (13, 14) d'air pour échanger de la chaleur, comme fluide secondaire, **caractérisé en ce que**
les volets (21, 22) de fermeture ne peuvent pas être commandés par un dispositif mécanique de réglage mais peuvent chacun être ouverts seulement par l'un des deux courant (13, 14) d'air, en raison de la pression dynamique, lorsqu'un taux (Smin) d'écoulement minimum est atteint et dans lequel il est prévu, en outre, au moins deux dispositifs (41, 42) de maintien, qui, lorsque les volets (21, 22) de fermeture sont ouverts, peuvent les maintenir respectivement dans une position ouverte.

2. Dispositif de refroidissement suivant la revendication 1,
**caractérisé en ce que**
les dispositifs (41, 42) de maintien fonctionnent électriquement, en comprenant notamment un électroaimant pouvant être mis en circuit.

3. Dispositif de refroidissement suivant l'une des revendications précédentes,
**caractérisé en ce qu'**
il comprend, en outre, une commande (50), qui est connectée électriquement, à la fois aux au moins deux ventilateurs (11, 12) et aux au moins deux dispositifs (41, 42) de maintien.

4. Dispositif de refroidissement suivant la revendication 3,
**caractérisé en ce que**
la commande (50) est constituée pour activer le dispositif (41, 42) de maintien, lorsque le ventilateur (11, 12), associé respectivement, a atteint un premier taux d'écoulement déterminé à l'avance.

5. Dispositif de refroidissement suivant l'une des revendications 3 ou 4,
**caractérisé en ce que**
la commande (50) est constituée pour désactiver le dispositif (41, 42) de maintien, lorsque le ventilateur (11, 12), associé respectivement, a atteint un deuxième taux d'écoulement déterminé à l'avance, notamment lorsque le ventilateur (11, 12), associé respectivement, ne refoule pas de courant d'air.

6. Dispositif de refroidissement suivant l'une des revendications 3 à 5,
**caractérisé en ce que**
la commande (50) est constituée pour détecter un courant électrique envoyé au dispositif (41, 42) de maintien, afin de pouvoir constater si le dispositif (41, 42) de maintien est ouvert ou fermé.

7. Dispositif de refroidissement suivant l'une des revendications précédentes,
**caractérisé en ce que**
les au moins deux ventilateurs (11, 12) pouvant être commandés, les au moins deux volets (21, 22) de fermeture, l'échangeur de chaleur (30) et les au moins deux dispositifs (41, 42) de maintien sont disposés dans une enveloppe (5).

8. Dispositif de refroidissement suivant l'une des revendications précédentes,
**caractérisé en ce que**
les au moins deux volets (21, 22) de fermeture peuvent être fermés par gravité par leur propre poids.

9. Dispositif de refroidissement suivant l'une des revendications précédentes,
**caractérisé en ce que**
en outre, les directions (R1, R2) d'écoulement données à l'avance d'au moins certains des ventilateurs (11, 12), de préférence de tous les ventilateurs (11, 12) arrivent perpendiculairement sur la surface de l'échangeur de chaleur (30).

10. Procédé pour faire fonction un dispositif (1) de refroidissement suivant l'une des revendications précédentes, qui comprend les stades suivants :
- on fait fonctionner au moins l'un d'au moins deux ventilateurs (11, 12), de manière à atteindre le taux (Smin) d'écoulement minimum;
- après ou également avant d'atteindre le taux (Smin) d'écoulement minimum, on active le dispositif (41, 42) de maintien, associé respectivement, pour maintenir le volet (21, 22) de fermeture, associé respectivement, dans une position ouverte.

11. Procédé suivant la revendication 10,
**caractérisé en ce qu'**
il comprend, en outre, les stades suivants :
- après maintien des volets (21, 22) de fermeture, on diminue le taux d'écoulement d'au moins un ventilateur (11, 12), en dessous d'un deuxième taux (S2) d'écoulement déterminé à l'avance;
- après avoir atteint le deuxième taux (S2) d'écoulement, on désactive le dispositif (41, 42) de maintien, associé respectivement, pour fermer le volet (21, 22) de fermeture, associé respectivement.
